# EUROPÄISCHE PATENTSCHRIFT

(11) **EP 0 663 543 B1**
(45) Veröffentlichungstag und Bekanntmachung des Hinweises auf die Patenterteilung: **15.04.1998**
(21) Anmeldenummer: 94117987.1
(22) Anmeldetag: 15.11.1994
(51) Int. Cl.: F16F 9/32, F16F 9/36, F16F 9/46

(54) **Hydraulischer, regelbarer Schwingungsdämpfer für Kraftfahrzeuge**
Hydraulic, controllable vibration damper for motor vehicles
Amortisseur de vibrations, hydraulique et réglable, pour véhicule automobiles

(30) Priorität: 16.12.1993 DE 4342883
(43) Veröffentlichungstag der Anmeldung: 19.07.1995
(73) Patentinhaber: Krupp Bilstein GmbH, 58256 Ennepetal (DE); DAIMLER-BENZ AKTIENGESELLSCHAFT, 70567 Stuttgart (DE)
(72) Erfinder: Huang, Zhen, Dr., D-42398 Wuppertal (DE); Schmidt, Klaus, Dipl.-Ing., D-51467 Bergisch Gladbach (DE); Scheerer, Hans, Dipl.-Ing., D-73734 Esslingen (DE); Opara, Andreas, Dipl.-Ing., D-70736 Fellbach (DE)
(74) Vertreter: John, Ernst

(56) Entgegenhaltungen:
- DE-A- 2 821 545
- DE-A- 3 831 718
- DE-A- 4 007 180
- DE-A- 4 041 829
- DE-A- 4 130 869
- DE-C- 4 242 011
- DE-U- 9 210 834
- FR-A- 2 596 124

## Beschreibung

Die Erfindung betrifft einen hydraulischen, regelbaren Schwingungsdämpfer für Kraftfahrzeuge.

In der deutschen Offenlegungsschrift DE 40 41 829 A1 ist ein regelbarer Einrohrschwingungsdämpfer mit einem seitlich am Dämpferzylinder angeordneten Dämpfungsventil zur mehrstufigen Einstellung der Dämpfungskraft über eine die Drosselventile am Dämpfungskolben überbrückended Bypasspassage beschrieben. Die Bypasspassage ist dabei als rohrförmiges Bauteil am Dämpferzylinder angeordnet oder mit dem Dämpferzylinder einstückig als Strangpreßteil hergestellt. Zwischen den beiden Strömungsanschlüssen ist die Bypasspassaged abdichtend geteilt, wodurch jeder der Strömungsanschlüsse mit einem der Arbeitsräume des Schwingungsdämpfers über einen Durchlaß verbunden ist.

Eine andere Lösung zur Schaffung einer mit den Arbeitsräumen verbundenen Bypasspasssage ist aus der deutschen Offenlegungsschrift DE 38 31 718 A 1 bekannt, bei der der Dämpferzylinder in einem zylinderförmigen Behälter angeordnet ist und sich mit seinem den Gasraum aufnehmenden Ende an diesem abdichtend abstützt und anderseits beide durch den Führungsverschluß der Kolbenstange verschlossen werden. Der so um den Dämpferzylinder gebildete Strömungskanal zwischen den Arbeitsräumen des Schwingungsdämpfers ist über eine Dichtung in einen oberen und einen unteren Zuflußkanal geteilt und das Dämpfungsventil derart angeordnet, daß einer der Strömungsanschlüsse mit dem oberen Zuflußkanal und der andere mit dem unteren Zuflußkanal verbunden ist. Durch die Verwendung eines doppelwandigen Zylinders zur Bildung des Strömungskanals wird entweder der Gas gefüllte Ausgleichsraum verkleinert oder der Schwingungsdämpfer in seinem Durchmesser entsprechend vergrößert.

Aus dem deutschen Gebrauchsmuster GM 92 10 834 ist ein regelbarer Einrohrschwingungsdämpfer mit einem am Dämpferzylinder angeordneten Dämpfungsventil bekannt, bei dem zur Schaffung der Bypassage zwischen den Arbeitsräumen des Schwingungsdämpfers der Dämpferzylinder aus zwei rohrförmigen Teilen besteht, von denen eines einen über die Länge des Kolbenhubes verlaufenden Abschnitt geringeren Durchmessers aufweist und das andere Teil diesen Abschnitt übergreift. Die offenen Enden der Rohrteile sind jeweils an dem anderen Teil abdichtend befestigt. Das Dämpfungsventil ist dabei am Dämpferzylinder so angeordnet, daß einer der Strömungsanschlüsse mit dem ringförmigen Strömungskanal verbunden ist, der eine Verbindung zum oberen Arbeitsraum des Schwingungsdämpfers aufweist, und der andere Strömungsanschluß direkt in den unteren Arbeitsraum geführt ist.

Neben einer aufwendigen Herstellung des Dämpferzylinders, insbesondere durch mehrere Schweiß- oder Lötverbindungen, weist der Schwingungsdämpfer auch den Nachteil auf, daß durch die Ausbildung des Strömungskanals und die damit verbundene Anordnung der Strömungsanschlüsse des Dämpfungsventils die axiale Lage des Dämpfungsventils vorgegeben ist und keine Variabilität erlaubt.

Die FR-A-25 96 124 zeigt einen hydraulischen, regelbaren Schwingungsdämpfer nach dem Oberbegriff des Anspruchs 1. Dieser Stoßdämpfer benötigt ebenfalls einen sehr hohen Fertigungsaufwand. Auch dieser Schwingungsdämpfer ist nur begrenzt variabel den Platzverhältnissen am Fahrzeug anzupassen und benötigt eine große Bauhöhe. Die Aufgabe der Erfindung ist es, einen Schwingungsdämpfer mit einem am Dämpferzylinder angeordneten Dämpfungsventil zu schaffen, der auf einfache Weise hergestellt werden kann und bei dem die axiale Lage des Dämpfungsventils am Dämpferzylinders nach Maßgabe der Platzverhältnisse im Fahrzeug in weiten Grenzen variiert werden kann.

Die Aufgabe der Erfindung wird durch die Merkmale des unabhängigen Patentanspruchs gelöst. Vorteilhafte Ausführungsformen sind in den Unteransprüchen beschrieben.

Bei dem erfindungsgemäßen Schwingungsdämpfer besteht der Dämpferzylinder zur Bildung eines Strömungskanals zwischen den Arbeitsräumen aus zwei, jeweils unterschiedliche Durchmesser aufweisenden Zylinderteilen, wobei das einen größeren Durchmesser aufweisende Zylinderteil mindestens über die Länge des Kolbenhubes das andere Zylinderteil übergreift und mit diesem an seinem offenen Ende abdichtend verbunden ist. Das radial außenliegende Zylinderteil nimmt die Strömungsanschlüsse für das Dämpfungsventil auf, zwischen denen die Zylinderteile mit einer Dichtungseinrichtung gegeneinander abgedichtet sind.

Das den mit Gas gefüllten Ausgleichsraum aufnehmende Zylinderteil übergreift das den Führungs- und Dichtungsverschluß der Kolbenstange aufnehmende Zylinderteil. Diese Ausbildung des Dämpferzylinders hat den wesentlichen Vorteil eines großen Ausgleichs raums bei gleichbleibenden Außendurchmesser des Schwingungsdämpfers.

Die abdichtende Befestigung der beiden Zylinderteile erfolgt nach einem vorteilhaften Merkmal der Erfindung derart, daß das radial innenliegende Zylinderteil eine umlaufende Aufweitung aufweist, an der das radial außenliegende Zylinderteil abdichtend befestigt ist. Dies kann beispielsweise durch eine umlaufende Löt- oder Schweißverbindung, aber auch durch Umbördelung der Kante des radial außenliegenden Zylinderteils und einer eingelegten Ringdichtung geschehen. Der Durchlaß vom Strömungskanal zum oberen Arbeitsraum ist vorzugsweise an der geneigten Fläche der Aufweitung angeordnet, wodurch eine mögliche Beschädigung des Kolbenringes am Dämpfungskolben vermieden wird.

Die radiale Abstützung des innenliegenden Zylinderteils erfolgt vorzugsweise über die zwischen den Strömungsanschlüssen des Dämpfungsventils angeordnete Dichtungseinrichtung.

Die Vorteile der erfindungsgemäßen Lösung liegen insbesondere in einer großen Variabilität der axialen Anordnungsmöglichkeiten des Dämpfungsventil am Dämpferzylinder bei einer einfachen und problemlosen Montage des Schwingungsdämpfers.

Die Erfindung wird nachstehendc anhand mehrerer Ausführungsbeispiele beschrieben. Die zugehörigen Zeichnungen zeigen:
- Fig. 1: ein Einrohrschwingungsdämpfer mit einem 4-Wege Dämpfungsventil und
- Fig. 2a - 2c: einen Ausschnitt des Dämpferzylinders im Bereich der Verbindung der Zylinderteile.

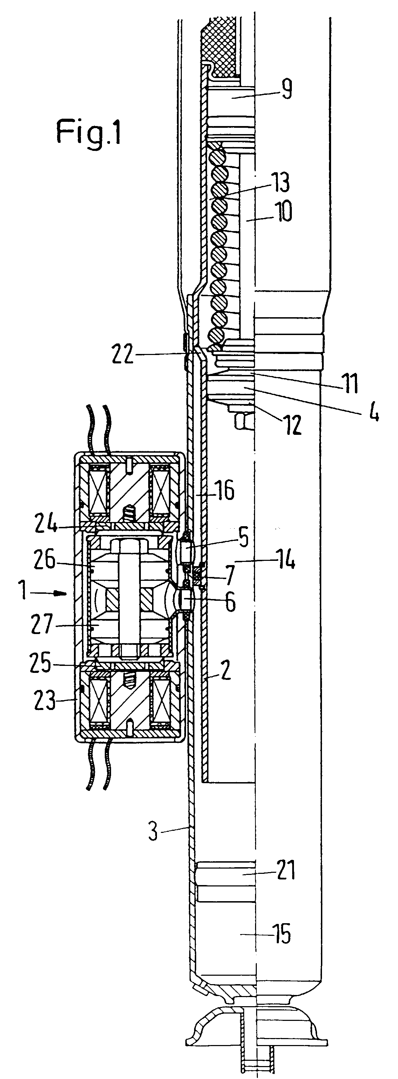

Der in Fig. 1 gezeigte regelbare Einrohrschwingungsdämpfer besteht im wesentlichen aus einem Dämpferzylinder und einer in den Dämpferzylinder eintauchenden, in einem mit druckabhängigen Drosselventilen 11,12 ausgestatteten Dämpfungskolben 4 endenden Kolbenstange 10, die durch die Führungs- und Dichtungseinheit 9 im Dämpferzylinder geführt wird. Der Dämpfungskolben 4 unterteilt den Dämpfungsflüssigkeit enthaltenden Dämpferzylinder in einen Arbeitsraum 13 und einen Arbeitsraum 14, der durch den Trennkolben 21 vom Ausgleichsraum 15 getrennt ist. Der Trennkolben ist in der Wandung des Dämpferzylinders schwimmend gelagert und ermöglicht so die Ölverdrängung der einfahrenden Kolbenstange 10.

Am Dämpferzylinder ist weiterhin ein Dämpfungsventil 1 angeordnet, das den Durchlaßquerschnitt einer die Drosselventile 11,12 überbrückenden Bypaßpassage steuert. Zur Bildung der Bypaßpassage besteht der Dämpferzylinder aus zwei Zylinderteilen 2 und 3, von den im Ausführungsbeispiel das den Ausgleichsraum aufnehmende Zylinderteil 3 einen größeren Durchmesser aufweist und das Zylinderteil 2 über die Hublänge des Dämpfungskolbens 4 übergreift und mit seinem offenen Ende am Zylinderteil 2 abdichtend befestigt ist. Der zwischen den beiden Zylinderteilen 2,3 befindliche Ringraum bildet bis zur Dichtungsanordnung 7 den Strömungskanal 16 der Bypasspassage und ist über den Durchlaß 22 mit dem Arbeitsraum 13 und über den Strömungsanschluß 5 mit dem Dämpfungsventil 1 verbunden. Der Strömungsanschluß 6 des Dämpfungsventils mündet in den zum Arbeitsraum 14 offenen Teil des Ringraums. Das am Zylinderteil 3 angeflanschte Dämpfungsventil 1 besteht aus jeweils zwei koaxial gegeneinander in einem Ventilgehäuse 23 angeordneten, elektromagnetisch betätigbaren, Ventilschiebern 24 und 25 und zwei strömungstechnisch in Reihe zu den Ventilschiebern 24,25 geschalteten druckabhängigen Ventilen 26 und 27 und realisiert in Verbindung mit den Drosselventilen 11 und 12 am Dämpfungskolben 4 in Zug- und Druckstufe des Schwingungsdämpfedrs jeweils vier Dämpfungskennlinien.

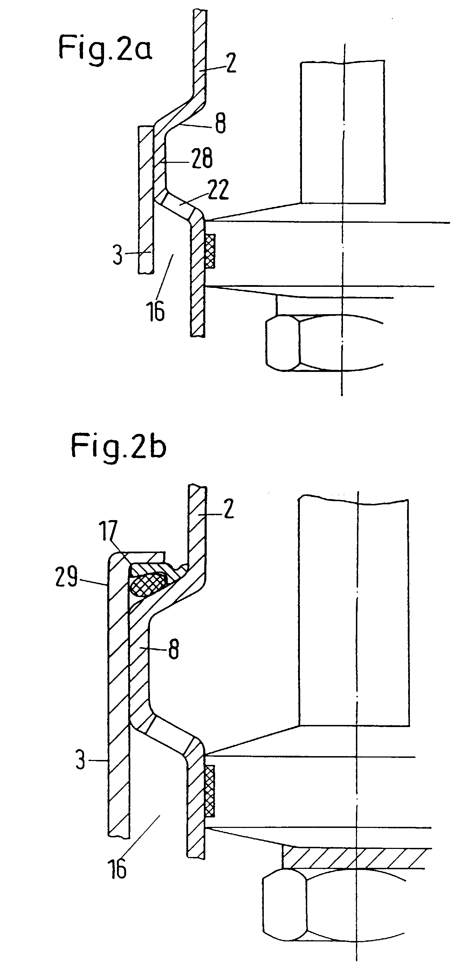

Die Fig. 2a bis 2c zeigen jeweils eine Möglichkeit der abdichtenden Befestigung des Zylinderteils 3 am Zylinderteil 2. Bei der Variante in Fig. 2a weist das Zylinderteil 2 am Ende des Strömungskanals 16 eine umlaufende Aufweitung 8 mit einer Fläche 28 auf an der das Zylinderteil 3 umlaufend mit Hilfe einer Löt- oder Schweißverbindung befestigt ist und der Strömungskanal 16 nach außen abgedichtet wird. Gleichzeitig wird die geneigte Fläche der Aufweitung 8 dafür genutzt mindestens einen Durchlaß 22 für die Verbindung vom Strömungskanal 16 anzuordnen.

Bei der Befestigung nach Fig. 2b wird die Kante 17 des Zylinderteils 3 über die Aufweitung 8 am Zylinderteil 2 umgebördelt. Zur Abdichtung des Strömungskanals 16 ist zwischen der umgebördelten Kante 17 und der Aufweitung 8 eine Ringdichtung 29 vorgesehen.

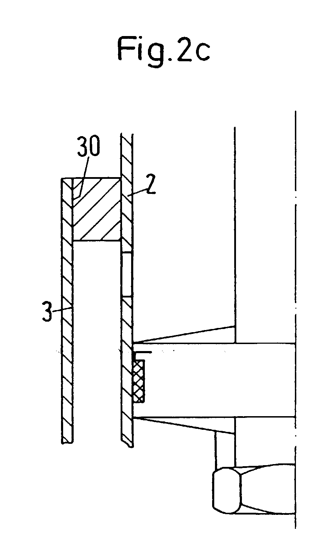

Eine weitere Variante der Befestigung ist in Fig. 2c gezeigt. Hier ist zwischen den Zylinderteilen 2 und 3 ein Distanzring 30 angeordnet, das mit beiden Zylinderteilen 2,3 zum Beispiel verschweißt oder verlötet ist.

## Patentansprüche

1. Hydraulischer, regelbarer Schwingungsdämpfer für Kraftfahrzeuge
- mit einem eine Dämpfungsflüssigkeit enthaltenden Dämpferzylinder, in dem ein mit einer Kolbenstange (10) verbundener, mit druckabhängigen Drosselventilen (11,12) versehener Dämpfungskolben (4) gleitet, der den Dämpferzylinder in zwei Arbeitsräume unterteilt,
- mit einem mit einem der Arbeitsräume zusammenwirkenden und mit Gas gefüllten Ausgleichsraum,
- mit einem außerhalb des Dämpferzylinders angeordneten Dämpfungsventil (1) für die Einstellung des Durchlaßquerschnittes in einem Bypass,
- bei dem der Dämpferzylinder zur Bildung eines Strömungskanales (16) zwischen den Arbeitsräumen (13,14) aus zwei, unterschiedliche Durchmesser aufweisenden Zylinderteilen (2,3) besteht,
- und das äußere Zylinderteil (3) mindestens über die Länge des Kolbenhubes das innere Zylinderteil (2) übergreift und mit diesem an seinem offenen Ende (17) abdichtend verbunden ist,
- bei dem das äußere Zylinderteil (3) zwei Strömungsanschlüsse (5,6) für das Dämpfungsventil (1) aufweist und
- bei dem die Zylinderteile zwischen den Strömungsanschlüssen (5,6) gegeneinander mit einer Dichtungsanordnung (7) abgedichtet sind,
dadurch gekennzeichnet, daß das innenliegende Zylinderteil (2) nach unten zum Innenraum des außenliegenden Zylinderteiles (3) geöffnet ist und der Ausgleichsraum (15) unterhalb des inneren Zylinderteiles (2) im äußeren Zylinderteil (3) angeordnet ist und die Dichtungseinrichtung (7) das radial innere Zylinderteil (2) am radial äußeren Zylinderteil (3) abstützt.

2. Schwingungsdämpfer nach Anspruch 1, dadurch gekennzeichnet, daß das radial innenliegende Zylinderteil (2) eine umlaufende Aufweitung (8) aufweist, an der das radial außenliegende Zylinderteil (3) abdichtend befestigt ist.

3. Schwingungsdämpfer nach einem der Ansprüche 1 oder 2, dadurch gekennzeichnet, daß der Durchlaß (22) vom Strömungskanal (16) zum Arbeitsraum (13) an der geneigten Fläche der Aufweitung (8) angeordnet ist.

4. Schwingungsdämpfer nach einem der Ansprüche 1 bis 3, dadurch gekennzeichnet, daß das radial außenliegende Zylinderteil (3) an seinem offenen Ende (17) einen Abschnitt geringeren Durchmessers aufweist und mit diesem am inneren Zylinderteil (2) abdichtend befestigt ist.

5. Schwingungsdämpfer nach einem der Ansprüche 1 bis 4, dadurch gekennzeichnet, daß die Dichtungsanordnung (7) aus mindestens einem Distanzteil (18,19) und einer umlaufenden Dichtung (20) besteht.

## Claims

1. Hydraulic, controllable vibration damper for motor vehicles, having
- a damping cylinder containing a damping fluid, in which slides a damping piston (4) which is connected to a piston rod (10) and provided with pressure-dependent throttle valves (11, 12) and which damping piston subdivides the damping cylinder into two working chambers,
- a compensating chamber which is filled with gas and cooperates with one of the working chambers,
- a damping valve (1) which is disposed outside the damping cylinder and is provided for the purpose of adjusting the through-flow cross-section of a bypass passage,
- wherein the damping cylinder for the purpose of forming a flow passage (16) between the working chambers (13, 14) consists of two cylinder parts (2, 3) which are of a different diameter,
- and the outer cylinder part (3) engages over the inner cylinder part (2) by at least the length of the piston travel and is sealingly connected thereto at its open end (17),
- wherein the outer cylinder part (3) comprises two flow connections (5, 6) for the damping valve (1) and
- wherein the cylinder parts are sealed between the flow connections (5, 6) with respect to each other by a sealing arrangement (7),
characterised in that the inner-lying cylinder part (2) is opened downwards with respect to the inner chamber of the outer-lying cylinder part (3) and the compensating chamber (15) is disposed below the inner cylinder part (2) in the outer cylinder part (3) and the sealing device (7) supports the radial inner cylinder part (2) at the radial outer cylinder part (3).

2. Vibration damper according to claim 1, characterised in that the radial inner-lying cylinder part (2) comprises a circumferential projection (8), to which the radial outer-lying cylinder part (3) is attached in a sealing manner.

3. Vibration damper according to claims 1 or 2, characterised in that the through-flow passage (22) from the flow passage (16) to the working chamber (13) is disposed on the inclined surface of the projection (8).

4. Vibration damper according to any one of the claims 1 to 3, characterised in that the radial outer-lying cylinder part (3) comprises at its open end (17) a portion having a reduced diameter and is attached in a sealing manner thereby to the inner cylinder part (2).

5. Vibration damper according to any one of the claims 1 to 4, characterised in that the sealing arrangement (7) consists of at least one spacer (18, 19) and a circumferential seal (20).

## Revendications

1. Amortisseur hydraulique réglable pour véhicule à moteur,
- comportant un cylindre d'amortisseur contenant un liquide d'amortissement, dans lequel coulisse un piston d'amortissement (4) relié à une tige de piston (10) et doté de clapets d'étranglement (11, 12) actionnés par la pression, qui partage le cylindre d'amortisseur en deux chambres de travail;
- comportant une chambre de compensation remplie de gaz et coopérant avec une des chambres de travail,
- comportant un clapet d'amortissement (1) disposé à l'extérieur du cylindre d'amortisseur, pour le réglage de la section transversale de passage, d'un passage de dérivation,
- dans lequel le cylindre d'amortisseur est constitué de deux pièces cylindriques (2, 3) présentant un diamètre différent, en vue de la formation d'un canal d'écoulement (16) entre les chambres de travail (13, 14),
- et la pièce cylindrique extérieure (3) entoure la pièce cylindrique intérieure (2) au moins sur la longueur de la course du piston, et est reliée de manière étanche à cette dernière à son extrémité ouverte (17) ,
- dans lequel la pièce cylindrique extérieure (3) présente deux raccords d'écoulement (5, 6) pour le clapet d'amortissement (1), et
- dans lequel les pièces cylindriques entre les raccords d'écoulement (5, 6) sont rendues étanches l'une par rapport à l'autre au moyen d'un agencement d'étanchéité (7),
caractérisé en ce que la pièce cylindrique intérieure (2) s'ouvre sur l'espace interne de la pièce cylindrique extérieure (3), et la chambre de compensation (15) est prévue en dessous de la pièce cylindrique intérieure (2) dans la pièce cylindrique extérieure (3), et le dispositif d'étanchéité (7) soutient la pièce cylindrique radialement intérieure (2) sur la pièce cylindrique extérieure (3).

2. Amortisseur selon la revendication 1, caractérisé en ce que la pièce cylindrique radialement intérieure (2) présente un élargissement périphérique (8) auquel la pièce cylindrique (3) radialement extérieure est fixée de manière étanche.

3. Amortisseur selon l'une des revendications 1 et 2, caractérisé en ce que le passage (22) entre le canal d'écoulement (16) et la chambre de travail (13) est disposé dans la surface inclinée de l'élargissement (8).

4. Amortisseur selon l'une des revendications 1 à 3, caractérisé en ce que la pièce cylindrique (3) radialement extérieure présente à son extrémité ouverte (17) une section de plus petit diamètre, et est fixée de manière étanche, par celle-ci, à la pièce cylindrique interne (2).

5. Amortisseur selon l'une des revendications 1 à 4, caractérisé en ce que l'agencement d'étanchéité (7) est constitué d'au moins une pièce d'écartement (18, 19) et d'un joint d'étanchéité périphérique (20).
